(19) Europäisches Patentamt
European Patent Office
Office européen des brevets

(11) EP 4 645 494 A1

(12) EUROPEAN PATENT APPLICATION

(43) Date of publication:
**05.11.2025 Bulletin 2025/45**

(21) Application number: **25173938.9**

(22) Date of filing: **02.05.2025**

(51) International Patent Classification (IPC):
***H01M 10/052*** (2010.01) ***H01M 10/0567*** (2010.01)
***H01M 10/0569*** (2010.01) ***H01M 10/42*** (2006.01)
*H01M 10/0568* (2010.01)

(52) Cooperative Patent Classification (CPC):
**H01M 10/052; H01M 10/0567; H01M 10/0569; H01M 10/4235;** H01M 10/0568

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **02.05.2024 KR 20240058581**

(71) Applicants:
- **SK On Co., Ltd.**
  **Seoul 03161 (KR)**
- **SK innovation Co., Ltd.**
  **Seoul 03188 (KR)**

(72) Inventors:
- **PARK, Ki Sung**
  **Daejeon 34124 (KR)**
- **LEE, Min Hee**
  **Daejeon 34124 (KR)**
- **KIM, Myoung Lae**
  **Daejeon 34124 (KR)**
- **CHO, In Haeng**
  **Daejeon 34124 (KR)**

(74) Representative: **Stolmár & Partner**
**Patentanwälte PartG mbB**
**Blumenstraße 17**
**80331 München (DE)**

# (54) ELECTROLYTE FOR LITHIUM SECONDARY BATTERY AND LITHIUM SECONDARY BATTERY INCLUDING THE SAME

(57) An electrolyte for a lithium secondary battery according to the present disclosure includes a lithium salt, an organic solvent, and an additive including a compound which includes a nitrogen-containing heterocycle and an alkyl sulfonyl group bonded to a nitrogen atom of the nitrogen-containing heterocycle. A lithium secondary battery according to the present disclosure includes the electrolyte.

[FIG. 1]

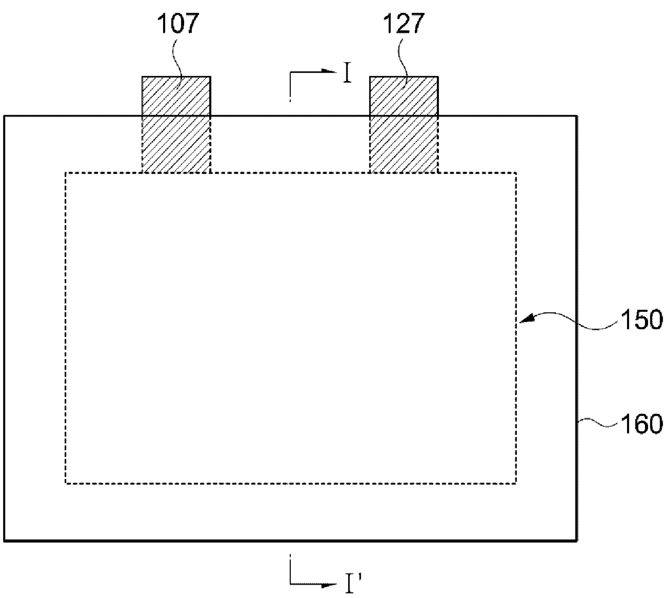


EP 4 645 494 A1

## Description

[BACKGROUND OF THE INVENTION]

1. Field of the Invention

The present disclosure provides an electrolyte for a lithium secondary battery and a lithium secondary battery including the same.

2. Description of the Related Art

A secondary battery is a battery that can be repeatedly charged and discharged. With rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to an eco-friendly automobile such as a hybrid vehicle as a power source thereof.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design, such that development thereof is progressing in this regard.

For example, the lithium secondary battery may include: an electrode assembly including a cathode, an anode, and a separation membrane (separator); and an electrolyte in which the electrode assembly is impregnated. The lithium secondary battery may further include, for example, a pouch-type outer case in which the electrode assembly and the electrolyte are housed.

For example, the cathode may include a lithium metal oxide capable of reversibly intercalating and deintercalating lithium as a cathode active material.

Meanwhile, in the lithium secondary battery, structural deformation of the lithium metal oxide, side reactions of the electrolyte, and the like may occur during repeated charge/discharge cycles and under a high-temperature environment. Accordingly, it is necessary to develop a lithium secondary battery that provides excellent cycle life characteristics and thermal stability even under repeated charging and discharging and high-temperature conditions.

[SUMMARY OF THE INVENTION]

An object of the present disclosure is to provide an electrolyte for a lithium secondary battery with improved high-temperature cycle life characteristics.

Another object of the present disclosure is to provide a lithium secondary battery with improved high-temperature cycle life characteristics.

An electrolyte for a lithium secondary battery according to the present disclosure includes: a lithium salt; an organic solvent; and an additive including a compound which includes a nitrogen-containing heterocycle and an alkyl sulfonyl group bonded to a nitrogen atom of the nitrogen-containing heterocycle.

According to exemplary embodiments, the nitrogen-containing heterocycle may be saturated or unsaturated.

According to exemplary embodiments, the nitrogen-containing heterocycle may be a 5-membered ring or a 6-membered ring.

According to exemplary embodiments, the nitrogen-containing heterocycle may include 1 or 2 nitrogen atoms.

According to exemplary embodiments, the nitrogen-containing heterocycle may include a pyrrole structure, a pyrroline structure, or a pyrrolidine structure.

According to exemplary embodiments, the alkyl sulfonyl group may include an alkyl group having 1 to 10 carbon atoms.

According to exemplary embodiments, the alkyl sulfonyl group may include a methyl group, an ethyl group or a propyl group.

According to exemplary embodiments, the compound may be represented by Formula 1 below:

[Formula 1]

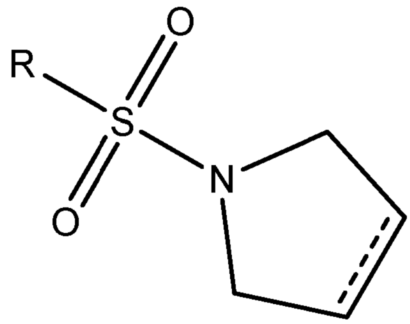

In Formula 1 above, R may be an alkyl group having 1 to 10 carbon atoms, and the dotted line may indicate the presence or absence of a bond.

According to exemplary embodiments, the compound may be represented by Formula 2 or Formula 3 below:

[Formula 2]

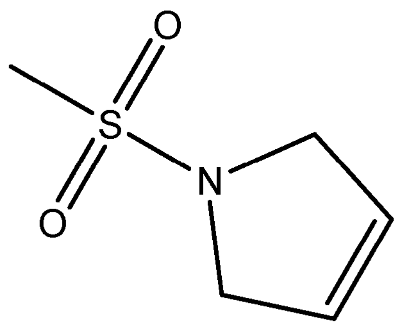

[Formula 3]

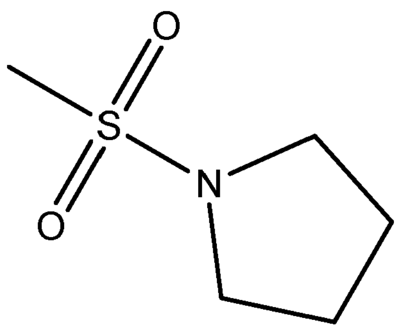

According to exemplary embodiments, a content of the additive may be 0.1% by weight to 2% by weight based on a total weight of the electrolyte.

According to exemplary embodiments, the organic solvent may include at least one selected from the group consisting of a cyclic carbonate compound, a linear carbonate compound, a linear ester compound and an ether compound.

According to exemplary embodiments, the organic solvent may include a cyclic carbonate compound and a linear carbonate compound, and a ratio of the content of the linear carbonate compound to the content of the cyclic carbonate compound may be 1 to 5 based on a total volume of the organic solvent.

According to exemplary embodiments, the electrolyte for a lithium secondary battery may further include an auxiliary additive including at least one selected from the group consisting of an unsaturated cyclic carbonate compound, a halogen-substituted cyclic carbonate compound, a fluorine-substituted phosphate compound, an oxalato phosphate

compound, a sultone compound and a sulfate compound.

According to exemplary embodiments, a content of the auxiliary additive may be 0.01% by weight to 10% by weight based on the total weight of the electrolyte.

A lithium secondary battery according to the present disclosure includes: a cathode; an anode disposed opposite to the cathode; and the electrolyte for a lithium secondary battery.

The electrolyte for a lithium secondary battery according to exemplary embodiments of the present disclosure may suppress side reactions with electrode active materials even at high temperatures. Accordingly, gas generation may be reduced and the battery volume expansion may be mitigated even when the lithium secondary battery is repeatedly charged and discharged.

The lithium secondary battery according to exemplary embodiments of the present disclosure may include an electrolyte with high thermal stability, such that the capacity retention rate remains high even when stored at high temperatures for a long period of time, thereby improving the cycle life characteristics and mitigating the battery volume expansion.

The electrolyte for a lithium secondary battery of the present disclosure and the lithium secondary battery including the same may be widely applied in green technology fields, such as electric vehicles, battery charging stations, as well as solar power generation, wind power generation, and the like, which use the batteries. In addition, the electrolyte for a lithium secondary battery of the present disclosure and the lithium secondary battery including the same may be used in eco-friendly electric vehicles, hybrid vehicles, and the like, which are aimed at mitigating climate change by reducing air pollution and greenhouse gas emission.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a plan view schematically illustrating a lithium secondary battery according to an embodiment;
FIG. 2 is a cross-sectional view schematically illustrating a lithium secondary battery according to an embodiment.

[DETAILED DESCRIPTION OF THE INVENTION]

The electrolyte for a lithium secondary battery of the present disclosure includes a lithium salt, an organic solvent, and an additive including a compound which includes a nitrogen-containing heterocycle and an alkyl sulfonyl group bonded to a nitrogen atom of the nitrogen-containing heterocycle. In addition, the lithium secondary battery of the present disclosure includes a cathode, an anode disposed opposite to the cathode, and the electrolyte for a lithium secondary battery.

Hereinafter, the embodiments of the present disclosure will be described in detail with reference to the accompanying drawings. However, these embodiments are merely examples, and the present disclosure is not limited to the specific embodiments described as examples.

The electrolyte for a lithium secondary battery according to exemplary embodiments includes an additive. The additive includes a compound including a nitrogen-containing heterocycle and an alkyl sulfonyl group bonded to a nitrogen atom of the nitrogen-containing heterocycle. The compound may have high compatibility with an organic solvent by including the nitrogen-containing heterocycle, and may capture highly reactive impurities by including the alkyl sulfonyl group. Accordingly, radicals or highly reactive byproducts generated when a battery including the electrolyte is exposed to a high-temperature environment for a long period of time and when lithium salts or other additives are decomposed may be removed.

According to exemplary embodiments, the nitrogen-containing heterocycle may be saturated or unsaturated. For example, the nitrogen-containing heterocycle may include no carbon-carbon unsaturated bond, or may include one or two carbon-carbon unsaturated bonds.

When the nitrogen-containing heterocycle is saturated, the reactivity of the compound may be reduced, thereby further suppressing side reactions within the electrolyte and reducing the amount of gas generated in the battery.

When the nitrogen-containing heterocycle is unsaturated, the migration of ions and electrons within the electrolyte may be efficient, thereby reducing the internal resistance of the battery and increasing the battery capacity.

According to exemplary embodiments, the nitrogen-containing heterocycle may be a 5-membered ring or a 6-membered ring. According to some embodiments, the nitrogen-containing heterocycle may be a 5-membered ring.

According to exemplary embodiments, the nitrogen-containing heterocycle may include one or two nitrogen atoms. According to some embodiments, the nitrogen-containing heterocycle may include one nitrogen atom.

When the nitrogen-containing heterocycle includes two nitrogen atoms, the alkyl sulfonyl group may be bonded to at least one of the two nitrogen atoms. For example, when the nitrogen-containing heterocycle includes two nitrogen

atoms, an alkyl sulfonyl group may be bonded to each of the two nitrogen atoms.

According to exemplary embodiments, the nitrogen-containing heterocycle may include a pyrrole structure, a pyrroline structure, or a pyrrolidine structure. In one embodiment, the nitrogen-containing heterocycle may include a pyrroline or pyrrolidine structure.

According to exemplary embodiments, the alkyl sulfonyl group is bonded to a nitrogen atom of the nitrogen-containing heterocycle. Accordingly, the high-temperature stability of the electrolyte may be improved while suppressing side reactions through the interaction between the sulfur atom and the nitrogen atom, and the high-temperature storage characteristics of the battery may also be enhanced..

According to exemplary embodiments, the alkyl sulfonyl group may include an alkyl group having 1 to 10 carbon atoms. According to some embodiments, the alkyl sulfonyl group may include an alkyl group having 1 to 5 carbon atoms. For example, the alkyl sulfonyl group may include a methyl group, an ethyl group or a propyl group.

According to exemplary embodiments, the compound may be represented by Formula 1 below.

[Formula 1]

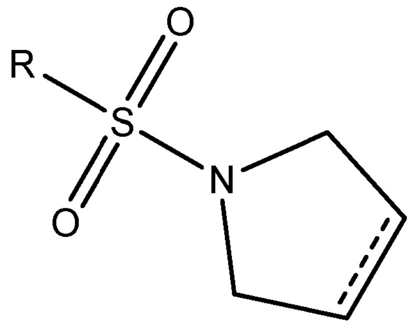

In Formula 1 above, R may be an alkyl group having 1 to 10 carbon atoms. According to some embodiments, R may be an alkyl group having 1 to 5 carbon atoms. For example, R may be a methyl group, an ethyl group or a propyl group.

In Formula 1 above, the dotted line may indicate the presence or absence of a bond. If the dotted line indicates a bond, the compound represented by Formula 1 may include a pyrroline structure. If the dotted line indicates no bond, the compound represented by Formula 1 may include a pyrrolidine structure.

According to exemplary embodiments, the compound may be represented by Formula 2 or Formula 3 below.

[Formula 2]

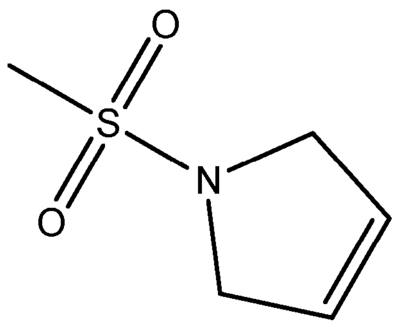

[Formula 3]

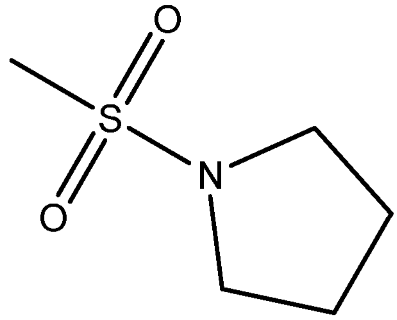

According to exemplary embodiments, a content of the additive may be 0.1% by weight ("wt%") to 2 wt% based on the total weight of the electrolyte. According to some embodiments, the content of the additive may be 0.5 wt% to 1.5 wt% or 0.5 wt% to 1 wt% based on the total weight of the electrolyte.

Within the above range, the high-temperature storage characteristics of the electrolyte may be improved without causing deterioration in the capacity characteristics or resistance characteristics of the battery.

According to exemplary embodiments, the lithium salt may include one or more lithium salt compounds. For example, the lithium salt may be represented as $Li^+X^-$, and non-limiting examples of an anion ($X^-$) of the lithium salt may include $PF_6^-$, $F^-$, $Cl^-$, Br, $I^-$, $NO_3^-$, $N(CN)_2^-$, $ClO_4^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, $BF_4^-$, $B(C_2O_4)_2^-$, $BF_2(C_2O_4)^-$, $B(C_3H_2O_4)_2^-$, $BF_2(C_3H_2O_4)^-$, $B(C_3HO_4F)_2^-$, $B(C_3F_2O_4)_2^-$ and the like. The anions may be used alone or in combination of two or more thereof as the anions of the lithium salts.

In some embodiments, the lithium salt may be included at a concentration of 0.01 M to 5 M, 0.01 M to 4 M, 0.5 M to 3 M, or 0.5 M to 2 M based on the organic solvent. Within the concentration range, lithium ions and/or electrons may migrate smoothly during charging and discharging of the battery, thereby enhancing the capacity and improving the charge and discharge efficiency.

The lithium salt may be included in an amount of 0.01 wt% to 5 wt% or 0.1 wt% to 2 wt% based on the total weight of the electrolyte. Within the range, the transfer of lithium ions and/or electrons during charging and discharging of the lithium secondary battery may be promoted, thereby enhancing the capacity and improving the charge and discharge efficiency.

The organic solvent may provide sufficient solubility for the lithium salt and the additive, etc., and may include an organic compound that is electrochemically stable without exhibiting reactivity in the lithium secondary battery.

In exemplary embodiments, the organic solvent may include at least one selected from the group consisting of a cyclic carbonate solvent, a linear carbonate solvent, a linear ester solvent and an ether solvent.

According to some embodiments, the organic solvent may include a cyclic carbonate solvent and a linear carbonate solvent. In this case, a ratio of the content of the linear carbonate solvent to the content of the cyclic carbonate solvent may be 1 to 5 or 2 to 4 based on the total volume of the organic solvent.

Examples of the cyclic carbonate solvents may include propylene carbonate (PC), ethylene carbonate (EC), butylene carbonate, etc.

Examples of the linear carbonate solvents may include dimethyl carbonate (DMC), ethyl methyl carbonate (EMC), methyl propyl carbonate, ethyl propyl carbonate, diethyl carbonate (DEC), dipropyl carbonate, etc.

Examples of the linear ester solvents may include methyl acetate (MA), ethyl acetate (EA), n-propyl acetate (n-PA), 1,1-dimethylethyl acetate (DMEA), methyl propionate (MP), ethyl propionate (EP), etc.

According to exemplary embodiments, the organic solvent may further include a cyclic ester solvent, a ketone solvent, an alcohol solvent, an aprotic solvent, etc. These may be used alone or in combination of two or more thereof.

The cyclic ester solvent includes an ester group rather than a carbonate group, and is thus distinguished from the cyclic carbonate solvent. Examples of the cyclic ester solvents may include γ-butyrolactone (GBL), decanolide, valerolactone, mevalonolactone, caprolactone, etc.

An example of the ketone solvent may include cyclohexanone. Examples of the alcohol solvents may include ethyl alcohol, isopropyl alcohol, etc.

Examples of the ether solvents may include dibutyl ether, tetraethylene glycol dimethyl ether (TEGDME), diethylene glycol dimethyl ether (DEGDME), dimethoxy ethane, 2-methyltetrahydrofuran, tetrahydrofuran, etc.

The aprotic solvent may include a nitrile solvent, an amide solvent such as dimethyl formamide (DMF), a dioxolane solvent such as 1,3-dioxolane, a sulfolane solvent, etc.

In an exemplary embodiment, the organic solvent may be used as a balance or a remaining amount excluding solid components such as a lithium salt, a compound including a carbon-carbon triple bond, a nitrogen-containing heterocycle and an alkyl sulfonyl group-containing compound. For example, the content of the organic solvent may be 80 wt% to 96 wt% based on the total weight of the electrolyte, and 90 wt% to 95 wt%.

In an exemplary embodiment, the electrolyte may further include an auxiliary additive. For example, the auxiliary additive may include at least one selected from the group consisting of an unsaturated cyclic carbonate compound, a halogen-substituted cyclic carbonate compound, a fluorine-substituted phosphate compound, an oxalato phosphate compound, a sultone compound and a sulfate compound.

The unsaturated cyclic carbonate compound may include vinyl ethylene carbonate (VEC), vinylene carbonate (VC), etc.

The halogen-substituted cyclic carbonate compound may include fluoroethylene carbonate (FEC), chloroethylene carbonate, etc.

The fluorine-substituted phosphate compound may include lithium difluorophosphate ($LiPO_2F_2$), etc.

The oxalato phosphate compound may include lithium difluoro bis(oxalato)phosphate, etc.

The sultone compound may include 1,3-propane sultone, 1,3-propene sultone, 1,4-butane sultone, etc.

The sulfate compound may include 1,2-ethylene sulfate, 1,2-propylene sulfate, trimethylene sulfate (1,3-propylene sulfate), methyltrimethylene sulfate (1,3-butylene sulfate), etc.

By adding the auxiliary additive, the stability of the electrode and the ionic conductivity of the electrolyte may be further improved. The auxiliary additive may be included in an appropriate amount within a range that does not inhibit the migration of lithium ions in the electrolyte.

According to exemplary embodiments, the content of the auxiliary additive may be 0.1 to 10 wt%, 0.5 to 5 wt%, or 1 to 3 wt% based on the total weight of the electrolyte.

In one embodiment, a weight ratio of the auxiliary additive to the weight of the additive may be 0.1 to 10, 1 to 10, or 5 to 10 based on the electrolyte. Within the above range, a lithium secondary battery having improved cycle life characteristics along with enhanced high-temperature storage characteristics may be implemented.

A lithium secondary battery according to exemplary embodiments may include a cathode, an anode, a separation membrane interposed between the cathode and the anode, and the above-described electrolyte for a lithium secondary battery.

Hereinafter, the lithium secondary battery according to exemplary embodiments will be described in more detail with reference to the drawings.

FIGS. 1 and 2 are schematic plan and cross-sectional views illustrating a lithium secondary battery according to exemplary embodiments, respectively. For example, FIG. 2 is a cross-sectional view taken on line I-I' in FIG. 1.

Referring to FIGS. 1 and 2, the lithium secondary battery may include an electrode assembly including a cathode 100, an anode 130 and a separation membrane 140 interposed between the cathode and the anode. The electrode assembly may be housed in a case 160 together with the electrolyte to be impregnated therein by the electrolyte.

The cathode 100 may include a cathode current collector 105 and a cathode active material layer 110 on the cathode current collector 105. For example, the cathode active material layer 110 may include a cathode active material, and if necessary, a cathode binder and a conductive material.

For example, the cathode active material may include a compound capable of reversibly intercalating and deintercalating lithium ions.

In exemplary embodiments, the cathode active material may include a lithium-transition metal oxide. For example, the lithium-transition metal oxide may include nickel (Ni), and may further include at least one of cobalt (Co) and manganese (Mn).

For example, the lithium-transition metal oxide may include a layered structure represented by Formula 4 below.

[Formula 4] $$Li_xNi_{(1-a-b)}Co_aM_bO_y$$

For example, in Formula 4, M may be at least one of Al, Zr, Ti, Cr, B, Mg, Mn, Ba, Si, Y, W and Sr, and x, y, a and b may satisfy $0.9\leq x\leq 1.2$, $1.9\leq y\leq 2.1$, $0\leq a+b\leq 0.5$.

In some embodiments, a+b may satisfy $0<a+b\leq 0.4$, $0<a+b\leq 0.3$, $0<a+b\leq 0.2$, $0<a+b\leq 0.17$, $0<a+b\leq 0.15$, $0<a+b\leq 0.12$, $0<a+b\leq 0.1$.

As shown in Formula 4 above, the lithium-transition metal compound may include Ni among Ni, Co and M in the greatest amount or molar ratio. Ni may function as a metal substantially related to the output and/or capacity of the lithium secondary battery, and by including Ni in the greatest amount among transition metals, a high-capacity, high-output lithium secondary battery may be implemented.

When the content of Ni in the cathode active material or lithium-transition metal oxide increases, the chemical stability such as the high-temperature storage stability of the secondary battery, may be relatively degraded. In addition, sufficient high-output and high-capacity characteristics resulting from the high Ni content may not be implemented due to

surface damage of the cathode active material or side reactions with the electrolyte during repeated charge/discharge cycles.

In one embodiment, lithium metal oxide particles may further include a coating element or a doping element. For example, the coating element or doping element may include Al, Ti, Ba, Zr, Si, B, Mg, P, Sr, W, La or an alloy or oxide thereof. In this case, a lithium secondary battery with improved cycle life characteristics may be implemented.

A slurry may be prepared by mixing and stirring the cathode active material with a binder, a conductive material and/or a dispersant in a solvent. The cathode current collector 105 may be coated with the slurry, then compressed and dried to prepare the cathode 100.

The cathode current collector 105 may include, for example, stainless steel, nickel, aluminum, titanium, copper or an alloy thereof, and preferably includes aluminum or an aluminum alloy.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or aqueous binder such as styrene-butadiene rubber (SBR), and may be used together with a thickener such as carboxymethyl cellulose (CMC).

For example, a PVDF-based binder may be used as the cathode binder. In this case, an amount of the binder for forming the cathode active material layer may be reduced and an amount of the cathode active material may be relatively increased, thereby improving the output and capacity of the secondary battery.

The conductive material may be included to promote electron migration between the active material particles. For example, the conductive material may include carbon-based conductive materials such as graphite, carbon black, graphene, or carbon nanotubes and/or metal-based conductive materials, including perovskite materials, such as tin, tin oxide, titanium oxide, $LaSrCoO_3$, and $LaSrMnO_3$, etc.

The anode 130 may include an anode current collector 125, and an anode active material layer 120 formed by coating the anode current collector 125 with an anode active material. If necessary, the anode may include an anode binder and a conductive material.

The anode active material usable herein may include any material known in the related art, as long as it can intercalate and deintercalate lithium ions, without particular limitation thereof. For example, carbon-based materials such as crystalline carbon, amorphous carbon, carbon composite, carbon fiber, etc.; a lithium alloy; a silicon (Si) compound or tin, etc. may be used. Examples of the amorphous carbon may include hard carbon, cokes, mesocarbon microbead (MCMB), mesophase pitch-based carbon fiber (MPCF) or the like.

Examples of the crystalline carbon may include graphite-based carbon such as natural graphite, artificial graphite, graphite cokes, graphite MCMB, graphite MPCF or the like. Other elements included in the lithium alloy may include, for example, aluminum, zinc, bismuth, cadmium, antimony, silicon, lead, tin, gallium or indium, etc.

The silicon compound may include, for example, silicon, silicon oxide or a silicon-carbon composite compound such as silicon carbide (SiC).

For example, when the anode active material includes the silicon-based active material, there may be a problem in that a thickness of the battery is increased during repeated charging and discharging. The lithium secondary battery according to exemplary embodiments may include the above-described electrolyte to relieve a thickness increase rate of the battery.

In some embodiments, a content of the silicon-based active material in the anode active material may be 1 to 20 wt%, 1 to 15 wt%, or 1 to 10 wt%.

For example, a slurry may be prepared by mixing and stirring the anode active material with a binder, a conductive material and/or a dispersant in a solvent. The anode current collector 125 may be coated with the slurry, then compressed and dried to prepare the anode active material layer 120.

For example, an anode slurry may be prepared by mixing the anode active material with the above-described components in a solvent. The anode slurry may be applied or deposited on the anode current collector, then dried and pressed to prepare the anode active material layer 120. The coating process may be performed using methods such as gravure coating, slot die coating, simultaneous multilayer die coating, imprinting, doctor blade coating, dip coating, bar coating or casting, etc., but it is not limited thereto. The anode active material layer 120 may further include a binder and optionally further include a conductive material, a thickener, etc.

Non-limiting examples of the solvent may include water, pure water, deionized water, distilled water, ethanol, isopropanol, methanol, acetone, n-propanol, t-butanol, etc.

The above-described materials that can be used when manufacturing the cathode as the binder, conductive material and thickener may also be used.

In some embodiments, a styrene-butadiene rubber (SBR)-based binder, carboxymethyl cellulose (CMC), polyacrylic acid-based binder, poly(3,4-ethylenedioxythiophene, PEDOT)-based binder, and the like may be used as an anode binder.

The separation membrane 140 may be interposed between the cathode 100 and the anode 130. The separation membrane 140 may include a porous polymer film made of a polyolefin polymer such as ethylene homopolymer, propylene

homopolymer, ethylene/butene copolymer, ethylene/hexene copolymer, ethylene/methacrylate copolymer. The separation membrane 140 may include a nonwoven fabric made of glass fibers having a high melting point, polyethylene terephthalate fibers, etc.

In some embodiments, the anode 130 may have an area (e.g., a contact area with the separation membrane 140) and/or volume larger than those/that of the cathode 100. Thereby, lithium ions generated from the cathode 100 may smoothly migrate to the anode 130 without being precipitated during the process, for example.

According to exemplary embodiments, an electrode cell is defined by the cathode 100, the anode 130 and the separation membrane 140, and a plurality of electrode cells are stacked to form, for example, a jelly roll type electrode assembly 150. For example, the electrode assembly 150 may be formed by winding, laminating, folding, and the like the separation membrane 140.

The electrode assembly 150 may be housed in the case 160 together with the electrolyte according to the above-described exemplary embodiments to define the lithium secondary battery. According to exemplary embodiments, the non-aqueous electrolyte may be used as the electrolyte.

As shown in FIG. 1, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) that extend or are exposed to the outside of the case 160.

The lithium secondary battery may be manufactured, for example, in a cylindrical shape using a can, a prismatic shape, a pouch shape or a coin shape.

## Example 1

(1) Preparation of electrolyte for lithium secondary battery

Ethylene carbonate (EC) and ethyl methyl carbonate (EMC) were mixed in a volume ratio of 25:75, and 1 wt% of fluoroethylene carbonate (FEC) and 1 wt% of lithium difluorophosphate ($LiPO_2F_2$) was added to the mixed solvent, then $LiPF_6$ was dissolved in the mixture to a concentration of 1.1 M. Subsequently, 0.5 wt% of a compound represented by Formula 2 below was added to the resulting solution to prepare an electrolyte.

[Formula 2]

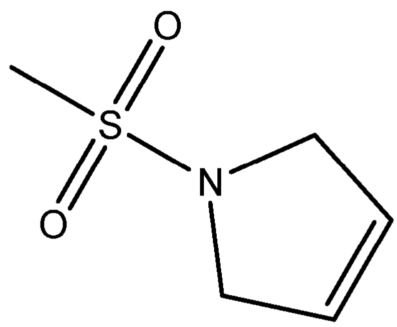

(2) Manufacture of lithium secondary battery

$LiNi_{0.88}Co_{0.06}Mn_{0.06}O_2$ as a cathode active material, polyvinylidene fluoride (PVdF) as a binder, and carbon as a conductive material were mixed in a weight ratio of 98:1:1, and then the mixture was dispersed in N-methyl-2-pyrrolidone to prepare a cathode slurry. An aluminum foil having a thickness of 12 μm was coated with the slurry, then dried and pressed to prepare a cathode.

Artificial graphite and natural graphite as anode active materials, styrene-butadiene rubber as a binder, and carboxymethyl cellulose as a thickener were mixed in a weight ratio of 96:2:2, and then the mixture was dispersed in water to prepare an anode active material slurry. A copper foil having a thickness of 8 μm was coated with the slurry, then dried and pressed to prepare an anode.

A film separator made of polyethylene (PE) material with a thickness of 13 μm was stacked between the prepared electrodes, and a cell was assembled using a pouch having dimensions of 5 mm (thickness) x 50 mm (width) x 60 mm (length). Then, the non-aqueous electrolyte was injected to manufacture a 2 Ah-class lithium secondary battery for an electric vehicle (EV).

**Example 2**

An electrolyte and a lithium secondary battery were manufactured in the same manner as in Example 1, except that the compound of Formula 2 was added in an amount of 1.0 wt%.

**Example 3**

An electrolyte and a lithium secondary battery were manufactured in the same manner as in Example 1, except that the compound of Formula 2 was added in an amount of 1.5 wt%.

**Examples** 4 to 6

Electrolytes and lithium secondary batteries were each manufactured in the same manner as in Examples 1 to 3, except that the compound of Formula 3 below was used instead of the compound of Formula 2 above.

[Formula 3]

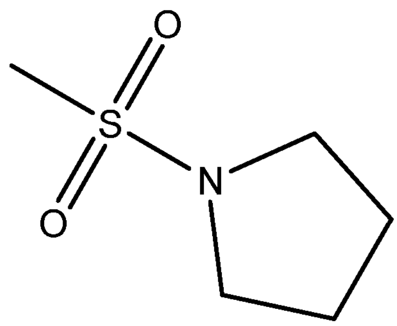

**Comparative Example** 1

An electrolyte and a lithium secondary battery were manufactured in the same manner as in Example 1, except that the compound of Formula 2 was not used.

The types and contents of the additives and auxiliary additives in the electrolytes of the examples and comparative examples are shown in Table 1 below.

[TABLE 1]

| | Additive | | Auxiliary additive | | | |
|---|---|---|---|---|---|---|
| | Type | Content (wt%) | Type | Content (wt%) | Type | Content (wt%) |
| Example 1 | Formula 2 | 0.5 | FEC | 1.0 | $LiPO_2F_2$ | 1.0 |
| Example 2 | Formula 2 | 1.0 | FEC | 1.0 | $LiPO_2F_2$ | 1.0 |
| Example 3 | Formula 2 | 1.5 | FEC | 1.0 | $LiPO_2F_2$ | 1.0 |
| Example 4 | Formula 3 | 0.5 | FEC | 1.0 | $LiPO_2F_2$ | 1.0 |
| Example 5 | Formula 3 | 1.0 | FEC | 1.0 | $LiPO_2F_2$ | 1.0 |
| Example 6 | Formula 3 | 1.5 | FEC | 1.0 | $LiPO_2F_2$ | 1.0 |
| Comparative Example 1 | - | - | FEC | 1.0 | $LiPO_2F_2$ | 1.0 |

For the lithium secondary batteries of the examples and comparative examples, evaluations were performed as in the following experimental examples, and the results are described in Table 2.

**Experimental Example** 1: **Evaluation** of initial **performance**

1) Measurement of initial discharge capacity

The lithium secondary batteries according to the above-described examples and comparative examples were charged (CC-CV 0.5C 4.2V 0.05C CUT-OFF) and discharged (CC 0.5C 2.7V CUT-OFF) three times each at 25 °C, and the discharge capacity at the third cycle was measured.

2) Measurement of initial internal resistance (DCIR)

The lithium secondary batteries of the examples and comparative examples were subjected to 0.5C CC/CV charging (4.2V 0.05C CUT-OFF) at 25 °C, and then 0.5C CC discharge up to a state of charging (SOC) of 60%. At SOC 60% point, the batteries were discharged and supplementary charged for 10 seconds each while varying C-rate to 0.2C 0.5C, 1C, 1.5C, 2C and 2.5C, then the DCIR was measured.

**Experimental Example 2: Evaluation** of high-temperature **storage characteristics**

1) Measurement of capacity retention rate

The lithium secondary batteries of the examples and comparative examples were subjected to 0.5C CC/CV charging (4.2V, 0.05C CUT-OFF) and 0.5C CC discharging (2.7V CUT-OFF) three times each at 25°C, and the discharge capacity C1 at the third cycle was measured. The charged lithium secondary batteries were stored at 60 °C for 8 weeks, then kept at room temperature for an additional 30 minutes, and subsequently subjected to 0.5C CC discharging (2.7 V cut-off) to measure the discharge capacity C2. The capacity retention rate was calculated according to Equation 1 below.

[Equation 1]

$$\text{Capacity retention rate (\%)} = C2/C1 \times 100\ (\%)$$

2) Measurement of battery thickness increase rate

The lithium secondary batteries of the examples and comparative examples were subjected to 0.5C CC/CV charging (4.2V 0.05C CUT-OFF) at 25 °C, and then the battery thickness T1 was measured.

After the lithium secondary batteries of the examples and comparative examples were left under ambient exposure conditions at 60 °C for 8 weeks, the battery thickness T2 was measured at room temperature. The battery thickness was measured using a flat plate thickness measuring device (Mitutoyo, 543-490B). The battery thickness increase rate was calculated according to Equation 2 below.

[Equation 2]

$$\text{Battery thickness increase rate (\%)} = (T2-T1)/T1 \times 100(\%)$$

[TABLE 2]

| | Initial performance | | High-temperature storage characteristics | |
|---|---|---|---|---|
| | Volume (mAh) | Resistance (mQ) | Capacity retention rate (%) | Thickness increase rate (%) |
| Example 1 | 1906 | 32.9 | 80.2 | 163 |
| Example 2 | 1897 | 33.9 | 81.0 | 162 |
| Example 3 | 1878 | 35.0 | 79.6 | 159 |
| Example 4 | 1902 | 33.0 | 80.2 | 143 |
| Example 5 | 1808 | 34.3 | 66.3 | 144 |

(continued)

| | Initial performance | | High-temperature storage characteristics | |
|---|---|---|---|---|
| | Volume (mAh) | Resistance (mQ) | Capacity retention rate (%) | Thickness increase rate (%) |
| Example 6 | 1736 | 36.7 | 59.7 | 143 |
| Comparative Example 1 | 1914 | 32.9 | 80.1 | 180 |

The lithium secondary batteries of the examples includes an electrolyte including a compound which includes a nitrogen-containing heterocycle of the present disclosure and an alkyl sulfonyl group bonded to a nitrogen atom of the nitrogen-containing heterocycle. Accordingly, the amount of increase in thickness during repeated battery charging and discharging was lower than that of the comparative example, and particularly, when stored for a long period of time under high-temperature conditions, the amount of gas generated inside the battery was reduced, thereby reducing the risk of explosion.

The battery of Comparative Example 1 included an electrolyte that did not include the compound of the present disclosure, resulting in an excessively large amount of internal gas generation under high-temperature conditions, and the battery thickness increased by approximately twofold.

The contents described above are merely examples of applying the principles of the present disclosure, and other configurations may be further included without departing from the scope of the present disclosure.

[Description of Reference Numerals]

100: Cathode
105: Cathode current collector
107: Cathode lead
110: Cathode active material layer
120: Anode active material layer
125: Anode current collector
127: Anode lead
130: Anode
140: Separation membrane
150: Electrode assembly
160: Case

## Claims

**1.** An electrolyte for a lithium secondary battery comprising:

a lithium salt;
an organic solvent; and
an additive comprising a compound which comprises a nitrogen-containing heterocycle and an alkyl sulfonyl group bonded to a nitrogen atom of the nitrogen-containing heterocycle.

**2.** The electrolyte for a lithium secondary battery according to claim 1, wherein the nitrogen-containing heterocycle is saturated or unsaturated.

**3.** The electrolyte for a lithium secondary battery according to claim 1 or 2, wherein the nitrogen-containing heterocycle is a 5-membered ring or a 6-membered ring.

**4.** The electrolyte for a lithium secondary battery according to claim 1 to 3, wherein the nitrogen-containing heterocycle comprises 1 or 2 nitrogen atoms.

**5.** The electrolyte for a lithium secondary battery according to claim 1 to 4, wherein the nitrogen-containing heterocycle comprises a pyrrole structure, a pyrroline structure, or a pyrrolidine structure.

**6.** The electrolyte for a lithium secondary battery according to claim 1 to 5, wherein the alkyl sulfonyl group comprises an alkyl group having 1 to 10 carbon atoms.

**7.** The electrolyte for a lithium secondary battery according to claim 1 to 6, wherein the alkyl sulfonyl group comprises a methyl group, an ethyl group or a propyl group.

**8.** The electrolyte for a lithium secondary battery according to claim 1 to 7, wherein the compound is represented by Formula 1 below:

[Formula 1]

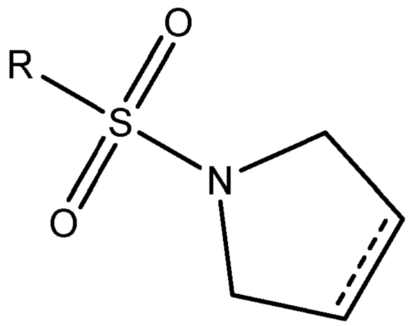

(in Formula 1 above, R is an alkyl group having 1 to 10 carbon atoms, and the dotted line indicates the presence or absence of a bond).

**9.** The electrolyte for a lithium secondary battery according to claim 1 to 8, wherein the compound is represented by Formula 2 or Formula 3 below:

[Formula 2]

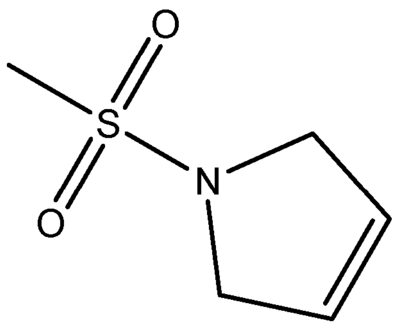

[Formula 3]

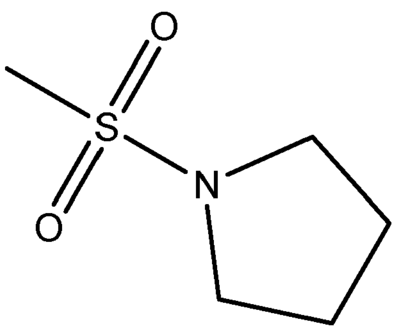

**10.** The electrolyte for a lithium secondary battery according to claim 1 to 9, wherein a content of the additive is 0.1% by weight to 2% by weight based on a total weight of the electrolyte.

**11.** The electrolyte for a lithium secondary battery according to claim 1 to 10, wherein the organic solvent comprises at least one selected from the group consisting of a cyclic carbonate compound, a linear carbonate compound, a linear ester compound and an ether compound.

**12.** The electrolyte for a lithium secondary battery according to claim 1 to 11, wherein the organic solvent comprises a cyclic carbonate compound and a linear carbonate compound, and a ratio of the content of the linear carbonate compound to the content of the cyclic carbonate compound is 1 to 5 based on a total volume of the organic solvent.

**13.** The electrolyte for a lithium secondary battery according to claim 1 to 12, further comprising an auxiliary additive comprising at least one selected from the group consisting of an unsaturated cyclic carbonate compound, a halogen-substituted cyclic carbonate compound, a fluorine-substituted phosphate compound, an oxalato phosphate compound, a sultone compound and a sulfate compound.

**14.** The electrolyte for a lithium secondary battery according to claim 13, wherein a content of the auxiliary additive is 0.01% by weight to 10% by weight based on the total weight of the electrolyte.

**15.** A lithium secondary battery comprising:

a cathode;
an anode disposed opposite to the cathode; and
the electrolyte for a lithium secondary battery according to claim 1 to 14.

[FIG. 1]

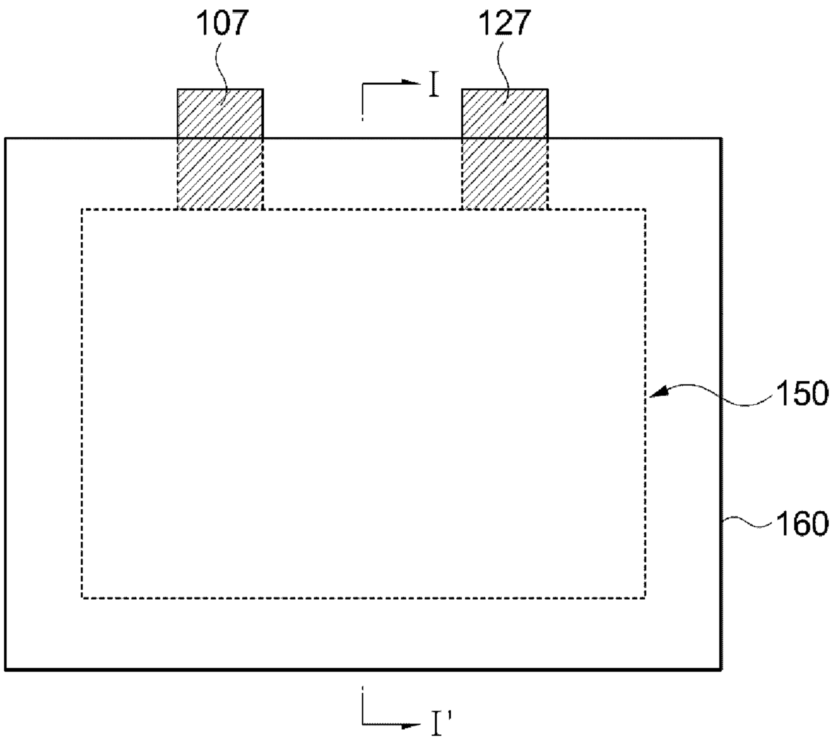


[FIG. 2]

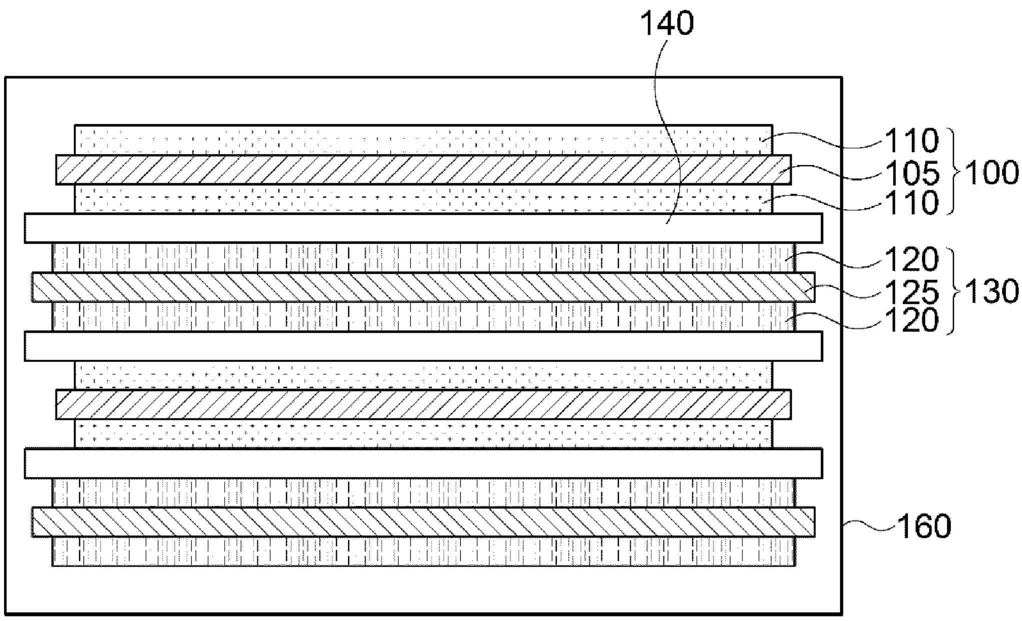

Europäisches Patentamt
European Patent Office
Office européen des brevets

# EUROPEAN SEARCH REPORT

Application Number
EP 25 17 3938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 904 521 A (NINGDE CONTEMPORARY AMPEREX TECH CO LTD) 18 June 2019 (2019-06-18) * Summary of the invention * * Detailed ways * * claims 1-13 * | 1-15 | INV. H01M10/052 H01M10/0567 H01M10/0569 H01M10/42 ADD. H01M10/0568 |
| A | CN 115 441 053 A (ZHEJIANG LANTIAN ENVIRONMENTAL PROT HI TECH CO LTD ET AL.) 6 December 2022 (2022-12-06) * Content of the invention * * claims 1-6 * | 1-15 | |

TECHNICAL FIELDS SEARCHED (IPC)

H01M

The present search report has been drawn up for all claims

| Place of search | Date of completion of the search | Examiner |
|---|---|---|
| Munich | 4 September 2025 | Kelly, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

# ANNEX TO THE EUROPEAN SEARCH REPORT ON EUROPEAN PATENT APPLICATION NO. EP 25 17 3938

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2025

| Patent document cited in search report | Publication date | Patent family member(s) | Publication date |
|---|---|---|---|
| CN 109904521 A | 18-06-2019 | NONE | |
| CN 115441053 A | 06-12-2022 | NONE | |

EPO FORM P0459

For more details about this annex : see Official Journal of the European Patent Office, No. 12/82